# EUROPEAN PATENT SPECIFICATION

(11) **EP 3 260 754 B1**
(45) Date of publication and mention of the grant of the patent: **07.06.2023**
(21) Application number: 17176617.3
(22) Date of filing: 19.06.2017
(51) Int. Cl.: F16N 13/06, F01M 11/04, F16N 37/00

(54) **GREASE LUBRICATOR**
SCHMIERFETTSCHMIERER
LUBRIFICATEUR DE GRAISSE

(30) Priority: 21.06.2016 DK PA201600364
(43) Date of publication of application: 27.12.2017
(73) Proprietor: Danhydra A/S, 7400 Herning (DK)
(72) Inventor: Hove, Thomas, 2610 Rødovre (DK)
(74) Representative: Larsen & Birkeholm A/S

(56) References cited:
- EP-A1- 1 213 529

## Description

### Prior Art

The invention relates to a grease lubricator primarily for use as central lubricator, which lubricator comprises a grease chamber with grease passage to a pump, which supplies grease under pressure to one or more grease outlets, as well as methods for filling and operation of the lubricator.

Grease lubricators of this kind are used primarily as central grease lubricators for use in especially wind turbines and elsewhere where bearings, bushings and similar movable parts must be kept constantly lubricated for operational reliability as well as life.

From FR 2270122 A1 is known a grease lubricator primarily for use as central lubricator, which lubricator comprises a grease chamber with grease passage which supplies grease under pressure to a grease outlet (14), and where the grease chamber is formed in a cylinder and with a piston (18) positioned against the grease, which piston is connected with a piston rod (24), which by means of a motor can move the piston (18) axially in the cylinder. Furthermore EP1213529A1 discloses a grease lubricator, according to the pre-amble of claim 1.

The problem with the known lubricators is their limited grease capacity and the risk of trapped air in the grease, which causes irregular grease supply to the individual lubrication sites. The pump cannot operate in air, why the pump qualities are lost short-term or long-term.

Service work must take place at the operational site itself, which in the case of offshore wind turbines means expensive transportation etc., there is a need for a grease lubricator which reduces such servicing.

### Objective of the invention

The objective of the invention is to obtain a lubricator with a significant grease capacity as the grease is supplied to the grease channel via a channel in the piston rod, which grease chamber is positioned under the piston whereby it is filled with grease from a grease container mounted at the end of the piston rod via the channel. Hereby the grease capacity depends solely on the capacity of the grease container.

By, as described in claim 2, allowing the piston rod to project through the top of the cylinder, the grease content in the chamber can easily be detected/read from the position of the piston rod.

By, as described in claim 3, supplying the piston rod with a drive mechanism for axial movement of the piston, the piston will be able to pressure against the grease and thereby ensure supply to the pump and pressing of any trapped air in the grease.

By, as described in claim 4, shaping a threaded bushing around the piston rod a grease container can be mounted hereto for filling of the grease chamber by movement of the piston upwards and thereby producing a negative pressure in the grease chamber so that the grease is sucked from the container and into the chamber.

By, as described in claim 5, supplying the channel with a non-return valve for blocking of the supply the piston will subsequently be able to compress the grease in the chamber.

By the method described in claim 6, the lubricator can easily and securely be filled with grease, just as the method described in claim 7 will ensure operation as the grease is supplied under pressure and any trapped air, which interferes with the pump's ability to pump, is avoided.

### The drawings

An example of an embodiment for the lubricator will, according to the invention, be described in detail in the following with reference to the drawing where
- figure 1: shows the lubricator with transparent cylinder wall (for visual clarity), and
- figure 2: shows the lubricator during filling from a grease container

### Description of the example of embodiment

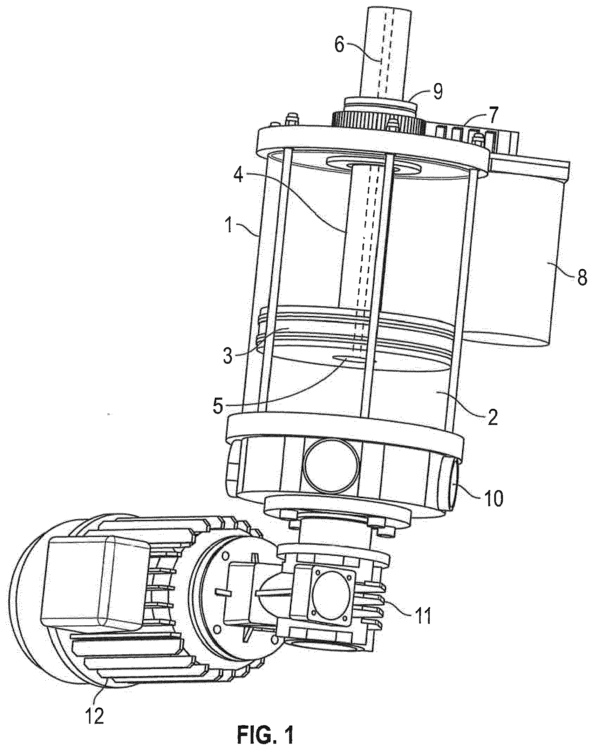

The grease lubricator according to the invention, which in figure 1 is shown in perspective, consists of a cylinder 1, which in the example shown is transparent but which in practice normally would be made of metal.

The cylinder 1 is mounted on a pump 11, which pump 11 is driven by a motor 12.

The pump 11 is supplied with grease from a grease chamber 2 positioned at the bottom of the cylinder 1, and presses the grease to a grease outlet 10, which can be from one to several outlets.

The grease outlets 10 are in ways known in the art connected to not shown wires, pipes, which lead to the individual lubrication sites.

Inside the cylinder 1 is mounted a piston 3 with a piston rod 4, which projects through the top of the cylinder.

The piston rod 4 and the piston 3 are equipped with a through channel 6, which ends below the piston 3 in an opening 5. In the through channel 6 can be inserted a not shown non-return valve to block the grease flow through the through channel 6.

The piston 3 can be displaced in the length of the cylinder 1 by means of a drive device comprising a threaded bushing, which works together with an external thread on the piston rod 4, and which is rotated by means of a motor 8 via a drive 7.

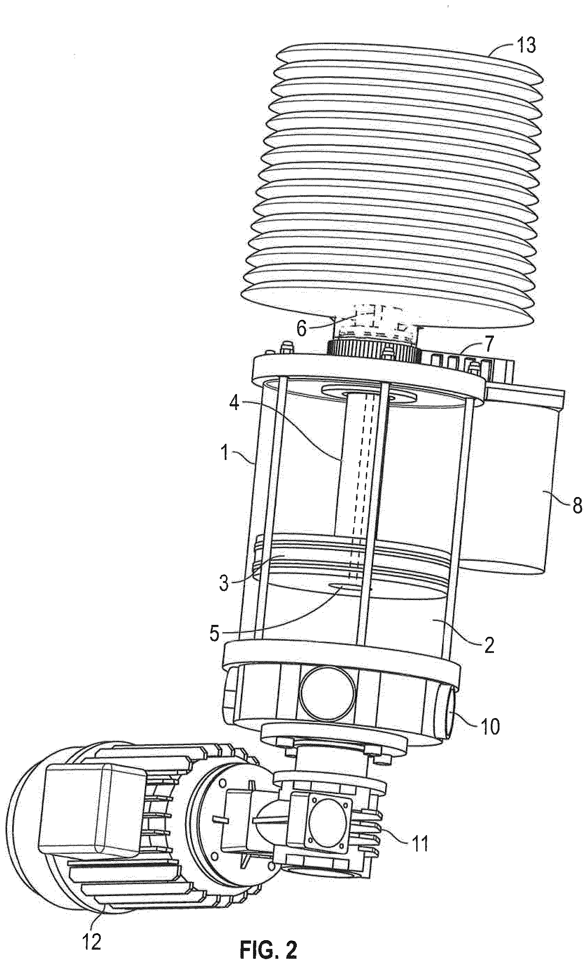

Hereby the piston 3 can be displaced up and down in the cylinder 1. At the top of the cylinder 1 is mounted a threaded bushing 9, which forms a screw nozzle for a thread on a grease container 13, as shown in figure 2 where the container 13 is screwed on to the lubricator.

Grease filling and operation of the lubricator will be described in the following. Grease filling will be described with reference to figure 2.

The starting point is a completely or partially empty grease chamber 2 at the bottom of the cylinder 1.

A filled grease container 13 is screwed on to the top of the cylinder 1, after which the motor 8 moves the piston 3 upwards.

Hereby is created a vacuum, which is compensated by the grease, which via the through channel 6, and the opening 5 is led into the grease chamber 2. The piston 3 is moved upwards concurrently with the emptying of the grease container 13, and when the piston 3 is in top position, all the grease will be in the grease chamber 2 in the cylinder 1. Following, the grease chamber 2 of the cylinder 1 of the grease lubricator is filled with grease and ready for operation.

In figure 1 the grease lubricator is shown in an operative mode where the grease chamber 2 is filled with grease. The pump 11 will in operation suck the grease from the grease chamber 2 and, to assist, the motor 8 can activate the piston 3 allowing the piston to compress the grease and thereby press the grease toward the suction side of the pump 11.

This extra compression has two advantages. It ensures that there will be no trapped air in the grease, which may interfere with the operation of the pump and it allows for the use of grease with a firmer consistency because of the compression.

The piston rod 4, which projects through the top, can be scanned, read and serve as an indicator of residual grease content in the cylinder 1 and thereby providing a signal when a minimum of grease in the grease chamber 2 has been reached.

As the grease chamber 2 is contained in the cylinder 1, it can be dimensioned as needed and thereby ensure that the necessary amount of grease for operation corresponds to the requirement.

## Claims

1. Grease lubricator primarily for use as central lubricator, which grease lubricator comprises a cylinder (1) comprising a grease chamber (2) formed in the cylinder (1) with a grease passage to a pump (11), which pump (11) supplies grease under pressure to one or more grease outlets (10), the grease chamber (2) provided with a piston (3) positioned against the grease, and the piston (3) is equipped with a piston rod (4) which by means of a motor (8) can move the piston (3) axially in the cylinder (1),
wherein the piston (3) and the piston rod (4) are equipped with a through channel (6), which runs between the outer end of the piston rod (4) and an opening (5) in the underside of the piston (3),
**characterized in that** the cylinder (1) comprises a threaded bushing (9) mounted at top of the cylinder (1) forming a screw nozzle for a thread on a grease container (13) where the grease container (13) is screwed on to the grease lubricator.

2. Grease lubricator according to claim 1, **characterised in that** the piston rod (4) projects through the top of the cylinder (1).

3. Grease lubricator according to claims 1 and 2, **characterised in that** the piston rod (4) is equipped with an external thread, which engages with a bolt-like rotor, which can be rotated by the motor (8) via a drive (7) to axial movement of the piston rod (4) and thereby the piston (3).

4. Grease lubricator according to claims 1-3, **characterised in that** the threaded bushing (9) is positioned around the part of the piston rod (4) that runs through the top of the cylinder (1).

5. Grease lubricator according to claims 1-4, **characterised in that** a non-return valve can be mounted in the channel (6) for blocking of the grease in the cylinder (1).

6. Method of filling a grease lubricator according to claims 1-5, **characterised in that** a filled grease container (13) is screwed on to the threaded bushing (9), following which the motor (8) moves the piston (3) upwards allowing the grease in the container (13) via the channel (6) and the opening (5) in the piston (3) to be sucked into the grease chamber (2).

7. Method of operation of a grease lubricator according to claims 1-5, **characterised in that** the piston (3) by means of the motor (8) presses the grease in the cylinder (1) partly to increase the grease supply pressure to the pump (11) and partly to secure against air bubbles, trapped air, in the grease.

## Patentansprüche

1. Fettschmiervorrichtung hauptsächlich zur Verwendung als Zentralschmiervorrichtung, wobei die Fettschmiervorrichtung einen Zylinder (1) umfasst, der eine in dem Zylinder (1) ausgebildete Fettkammer (2) mit einem Fettdurchgang zu einer Pumpe (11) umfasst, wobei die Pumpe (11) einem oder mehreren Fettauslässen (10) Fett unter Druck zuführt, wobei die Fettkammer (2) mit einem Kolben (3) versehen ist, der gegen das Fett positioniert ist, und der Kolben (3) mit einer Kolbenstange (4) ausgestattet ist, welche mittels eines Motors (8) den Kolben (3) axial in dem Zylinder (1) bewegen kann,
wobei der Kolben (3) und die Kolbenstange (4) mit einem Durchgangskanal (6) ausgestattet sind, welcher zwischen dem äußeren Ende der Kolbenstange (4) und einer Öffnung (5) am unteren Ende des Kolbens (3) verläuft,
**dadurch gekennzeichnet, dass** der Zylinder (1) eine auf das obere Ende des Zylinders (1) montierte Gewindebuchse (9) umfasst, die eine Schraubdüse für ein Gewinde auf einem Fettbehälter (13) ausbildet, wobei der Fettbehälter (13) auf die Fettschmiervorrichtung geschraubt ist.

2. Fettschmiervorrichtung nach Anspruch 1, **dadurch gekennzeichnet, dass** die Kolbenstange (4) durch das obere Ende des Zylinders (1) ragt.

3. Fettschmiervorrichtung nach Anspruch 1 und 2, **dadurch gekennzeichnet, dass** die Kolbenstange (4) mit einem Außengewinde ausgestattet ist, welches in Eingriff mit einem bolzenartigen Rotor steht, welcher über einen Antrieb (7) durch den Motor (8) zur axialen Bewegung der Kolbenstange (4) und damit des Kolbens (3) gedreht werden kann.

4. Fettschmiervorrichtung nach Anspruch 1-3, **dadurch gekennzeichnet, dass** die Gewindebuchse (9) um den Teil der Kolbenstange (4) herum positioniert ist, der durch das obere Ende des Zylinders (1) verläuft.

5. Fettschmiervorrichtung nach Anspruch 1-4, **dadurch gekennzeichnet, dass** ein Rückschlagventil zum Blockieren des Fettes in dem Zylinder (1) in den Kanal (6) montiert werden kann.

6. Verfahren zum Befüllen einer Fettschmiervorrichtung nach Anspruch 1-5, **dadurch gekennzeichnet, dass** ein gefüllter Fettbehälter (13) auf die Gewindebuchse (9) geschraubt ist, wonach der Motor (8) den Kolben (3) nach oben bewegt, wodurch das Einsaugen des Fetts in dem Behälter (13) über den Kanal (6) und die Öffnung (5) im Kolben (3) in die Fettkammer (2) ermöglicht wird.

7. Verfahren zum Betrieb einer Fettschmiervorrichtung nach Anspruch 1-5, **dadurch gekennzeichnet, dass** der Kolben (3) das Fett mittels des Motors (8) in den Zylinder (1) drückt, teilweise um den Fettzufuhrdruck zur Pumpe (11) zu erhöhen und teilweise um gegen Luftblasen, eingeschlossene Luft, im Fett abzusichern.

## Revendications

1. Lubrificateur de graisse principalement destiné à être utilisé comme lubrificateur central, lequel lubrificateur de graisse comprend un cylindre (1) comprenant une chambre à graisse (2) formée dans le cylindre (1) avec un passage de graisse vers une pompe (11), laquelle pompe (11) fournit de la graisse sous pression à une ou plusieurs sorties de graisse (10), la chambre à graisse (2) étant pourvue d'un piston (3) positionné contre la graisse, et le piston (3) est équipé d'une tige de piston (4) qui, au moyen d'un moteur (8), peut déplacer le piston (3) axialement dans le cylindre (1), dans lequel le piston (3) et la tige de piston (4) sont équipés d'un canal traversant (6), qui s'étend entre l'extrémité externe de la tige de piston (4) et une ouverture (5) dans la face inférieure du piston (3),
**caractérisé en ce que** le cylindre (1) comprend une douille filetée (9) montée au niveau de la partie supérieure du cylindre (1) formant une buse à vis pour un filetage sur un récipient à graisse (13) où le récipient à graisse (13) est vissé sur le lubrificateur de graisse.

2. Lubrificateur de graisse selon la revendication 1, **caractérisé en ce que** la tige de piston (4) fait saillie à travers la partie supérieure du cylindre (1).

3. Lubrificateur de graisse selon les revendications 1 et 2, **caractérisé en ce que** la tige de piston (4) est équipée d'un filetage externe, qui vient en prise avec un rotor en forme de boulon, qui peut être entraîné en rotation par le moteur (8) via un entraînement (7) vers un mouvement axial de la tige de piston (4) et ainsi du piston (3).

4. Lubrificateur de graisse selon les revendications 1 à 3, **caractérisé en ce que** la douille filetée (9) est positionnée autour de la partie de la tige de piston (4) qui traverse la partie supérieure du cylindre (1).

5. Lubrificateur de graisse selon les revendications 1 à 4, **caractérisé en ce qu'**un clapet anti-retour peut être monté dans le canal (6) pour bloquer la graisse dans le cylindre (1).

6. Procédé de remplissage d'un lubrificateur de graisse selon les revendications 1 à 5, **caractérisé en ce qu'**un récipient à graisse rempli (13) est vissé sur la douille filetée (9), après quoi le moteur (8) déplace le piston (3) vers le haut permettant à la graisse dans le récipient (13) via le canal (6) et l'ouverture (5) dans le piston (3) d'être aspirée dans la chambre à graisse (2).

7. Procédé de fonctionnement d'un lubrificateur de graisse selon les revendications 1 à 5, **caractérisé en ce que** le piston (3) au moyen du moteur (8) presse la graisse dans le cylindre (1) en partie pour augmenter la pression d'alimentation en graisse vers la pompe (11) et en partie pour protéger contre les bulles d'air, l'air emprisonné, dans la graisse.
